# EUROPEAN PATENT APPLICATION

(11) **EP 4 464 146 A1**
(43) Date of publication of application: **20.11.2024**
(21) Application number: 23765809.1
(22) Date of filing: 24.02.2023
(51) Int. Cl.: A01D 34/64, B62D 11/04, B60L 15/20

(54) **RIDING-TYPE MOWING DEVICE**

(30) Priority: 11.03.2022 CN 202210241722
(71) Applicant: Nanjing Chervon Industry Co., Ltd., Nanjing, Jiangsu 211106 (CN)
(72) Inventor: YANG, Dezhong, Nanjing, Jiangsu 211106 (CN); LI, Tonghao, Nanjing, Jiangsu 211106 (CN); WANG, Lei, Nanjing, Jiangsu 211106 (CN)
(74) Representative: Sun, Yiming
(86) International application number: PCT/CN2023/078129
(87) International publication number: WO 2023/169231

(57) **Abstract**

Provided is a riding mowing device. The riding mowing device includes a seat for a user to sit on; a vehicle frame for supporting the seat; a cutting assembly; a traveling assembly configured to drive the riding mowing device to travel and including a left drive wheel and a right drive wheel; a power supply assembly configured to supply power to at least the cutting assembly and the traveling assembly and mounted to the vehicle frame; and a steering wheel assembly including a steering wheel for the user to turn to control the direction of the riding mowing device, where the steering wheel includes an initial position and an extreme position. The riding mowing device further includes a traveling control module configured to, when the steering wheel rotates from the initial position to the extreme position, decrease the target rotational speed of an inner wheel among the left drive wheel and the right drive wheel and increase the target rotational speed of an outer wheel among the left drive wheel and the right drive wheel.

## Description

This application claims priority to Chinese Patent Application No. 202210241722.0 filed with the China National Intellectual Property Administration (CNIPA) on Mar. 11, 2022, the disclosure of which is incorporated herein by reference in its entirety.

### TECHNICAL FIELD

The present application relates to garden tools, for example, a riding mowing device.

### BACKGROUND

As a garden tool, a mower is widely used in the field of trimming lawns and vegetation. A riding mower is more labor-saving and more efficient in mowing than a push mower. When the riding mower is controlled to turn, the riding mower is required to be able to turn flexibly to satisfy the mowing requirement. A steering wheel is operated in a manner similar to a manner in which a car is driven. Therefore, the riding mower whose traveling direction is controlled by the steering wheel is easy to use and very friendly to a novice user. For the driving safety of the user, the riding mower generally has a setting for decreasing the speed during turning. However, after the turn is completed, when the user straightens the steering wheel out or the steering wheel automatically straightens out, especially when the steering wheel straightens out quickly, the vehicle speed quickly returns to the speed when the vehicle goes straight, giving the user a quick rush feeling of being pushed back and resulting in a relatively poor user experience.

### SUMMARY

The present application provides a riding mowing device, which provides a better user experience when a steering wheel straightens out.

A riding mowing device includes a seat for a user to sit on; a vehicle frame for supporting the seat; a cutting assembly including a cutting deck and a mowing element, where the mowing element is at least partially accommodated in the cutting deck; a traveling assembly configured to drive the riding mowing device to travel and including a left drive wheel and a right drive wheel; a power supply assembly configured to supply power to at least the cutting assembly and the traveling assembly and mounted to the vehicle frame; and a steering wheel assembly including a steering wheel for the user to turn to control the direction of the riding mowing device, where the steering wheel includes an initial position and an extreme position. The riding mowing device further includes a traveling control module configured to, when the steering wheel rotates from the initial position to the extreme position, decrease the target rotational speed of an inner wheel among the left drive wheel and the right drive wheel and increase the target rotational speed of an outer wheel among the left drive wheel and the right drive wheel.

A riding device includes a seat for a user to sit on; a vehicle frame for supporting the seat; a traveling assembly configured to drive the riding device to travel and including a left drive wheel and a right drive wheel; a power supply assembly configured to supply power to at least a cutting assembly and the traveling assembly and mounted to the vehicle frame; and a steering wheel assembly including a steering wheel for the user to turn to control the direction of the riding device, where the steering wheel includes an initial position and an extreme position. The riding device further includes a traveling control module configured to, when the steering wheel rotates from the initial position to the extreme position, increase the target rotational speed of an outer wheel among the left drive wheel and the right drive wheel.

A control method for a riding device is provided. The riding device includes a seat for a user to sit on; a vehicle frame for supporting the seat; a traveling assembly configured to drive the riding device to travel and including a left drive wheel and a right drive wheel; a power supply assembly configured to supply power to at least a cutting assembly and the traveling assembly and mounted to the vehicle frame; and a steering wheel assembly including a steering wheel for the user to turn to control the direction of the riding device, where the steering wheel includes an initial position and an extreme position. The control method includes: when the steering wheel rotates from the initial position to the extreme position, increasing the target rotational speed of an outer wheel among the left drive wheel and the right drive wheel.

### BRIEF DESCRIPTION OF DRAWINGS

FIG. 1 is a perspective view of a riding mower according to an example of the present application.
FIG. 2 is a bottom view of the riding mower in FIG. 1.
FIG. 3 is a perspective view of a steering wheel assembly of the riding mower in FIG. 2.
FIG. 4A is a schematic view of a steering wheel in FIG. 3 turning left.
FIG. 4B is a schematic view of a steering wheel in FIG. 3 turning right.
FIG. 5 is a diagram of a control system for an electric motor according to an example of the present application.
FIG. 6 is a graph illustrating turning curves in the related art.
FIG. 7 is a graph illustrating turning curves according to an example of the present application.
FIG. 8 is a graph illustrating turning curves according to another example of the present application.

### DETAILED DESCRIPTION

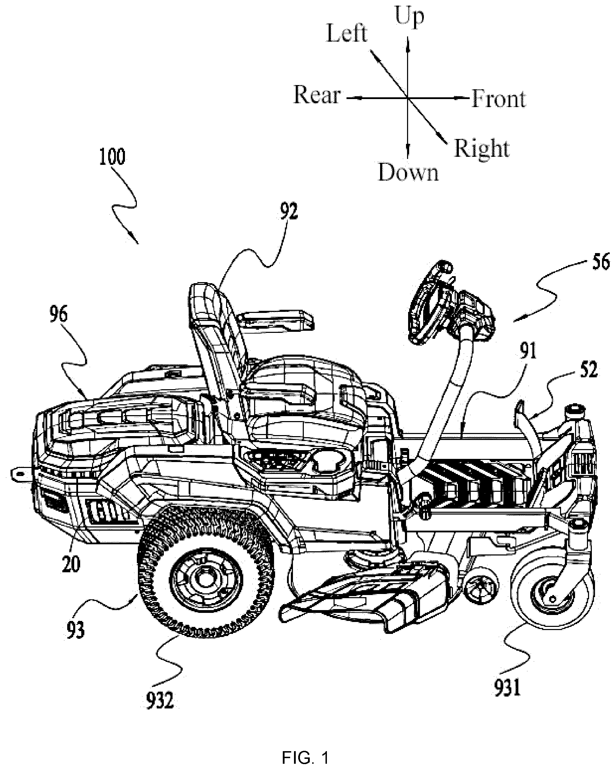

As shown in FIG. 1, a riding mowing device in the present disclosure is a riding mower 100. A user may sit on the riding mower 100 to control the riding mower 100 to trim lawns and other vegetation.

In this specification, directions such as the front, rear, left, right, up, and down are described as directions shown in FIG. 1. For example, when the user sits on the riding mower 100 on the ground, it is defined that a direction which the user faces is the front, a direction which the user faces away from is the rear, a direction on the left-hand side of the user is the left, a direction on the right-hand side of the user is the right, a direction facing the ground is the down, and a direction facing away from the ground is the up.

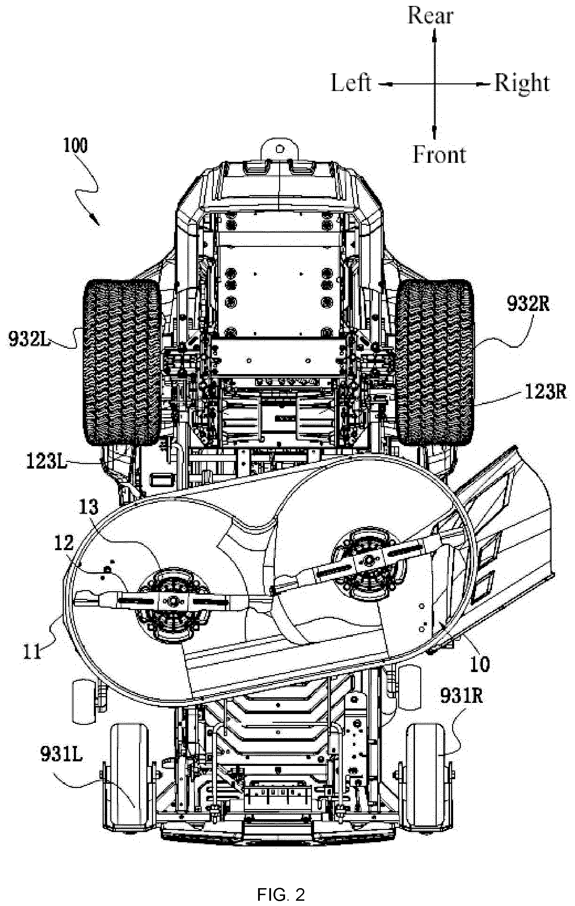

As shown in FIGS. 1 and 2, the riding mower 100 includes a cutting assembly 10, a vehicle frame 91, a seat 92, a housing system 20, a traveling assembly 93, a power supply assembly 96, and an operating assembly 50. The vehicle frame 91 and the housing system 20 form a body of the riding mower 100. The body is used for mounting the cutting assembly 10, the seat 92, the power supply assembly 96, and the like. The traveling assembly 93 is configured to support the body. The riding mower 100 supplies energy to the cutting assembly 10, the traveling assembly 93, an illumination system 40, and the like through a power assembly. In this example, the power assembly of the riding mower 100 is the power supply assembly 96 that supplies electrical energy to the assemblies of the riding mower 100 so that the riding mower 100 can be used as a power tool. The electric riding mower 100 is more environmentally friendly and more energy-efficient than a fuel-based riding mower 100.

The cutting assembly 10 is configured to output power to implement the function of the riding mower 100. Referring to FIG. 2, the cutting assembly 10 includes cutting decks 11, mowing elements 12, and first motors 13 for driving the mowing elements 12. In an example, the power of the first motor 13 is about 1500 W. In an example, the power of the first motor 13 is about 3000 W. The mowing element 12 is driven by the first motor 13 to rotate at a high speed to cut the vegetation. For example, the mowing element 12 is a blade for cutting grass on the lawn. The cutting deck 11 surrounds a mowing space for accommodating at least part of the mowing element 12, that is to say, the mowing element 12 is at least partially accommodated in the cutting deck 11. The first motor 13 is configured to drive the mowing element 12 to rotate. The cutting assembly 10 is disposed below the vehicle frame 91. In an example, two mowing elements 12 may be provided, two first motors 13 may be provided, and correspondingly, the two first motors 13 drive the two mowing elements 12, respectively. In another example, three mowing elements 12 may be provided, three first motors 13 may be provided, and correspondingly, the three first motors 13 drive the three mowing elements 12, respectively.

The vehicle frame 91 extends basically along the front and rear direction of the riding mower 100. The cutting assembly 10, the housing system 20, the seat 92, the traveling assembly 93, and the power supply assembly 96 are all mounted to the vehicle frame 91. The vehicle frame 91 is configured to support the body of the entire riding mower 100. The traveling assembly 93 is configured to support the vehicle frame 91 so that the riding mower 100 can travel on the ground. The traveling assembly 93 includes a first traveling assembly 931 and a second traveling assembly 932. The first traveling assembly 931 is a front traveling assembly. In this example, the first traveling assembly 931 includes two first traveling wheels that are a left first traveling wheel 931L and a right first traveling wheel 931R. In other examples, the first traveling assembly 931 may include only one first traveling wheel. The second traveling assembly 932 is a rear traveling assembly and includes two second traveling wheels that are a left second traveling wheel 932L and a right second traveling wheel 932R. In this example, the second traveling assembly 932 drives the riding mower 100 to travel, that is to say, the left second traveling wheel 932L is a left drive wheel, and the right second traveling wheel 932R is a right drive wheel. In other examples, the front traveling assembly may be used as the drive wheels.

The traveling assembly 93 further includes a second motor 123 for driving the second traveling assembly 932. In this example, two second motors 123 are provided, that is to say, the left second traveling wheel 932L and the right second traveling wheel 932R are driven by a left second motor 123L and a right second motor 123R, respectively. In an example, the power of the second motor 123 is about 1500 W. In another example, the power of the second motor 123 is about 3000 W. In the present disclosure, for the convenience of description, the drive wheel located on the inside of the curve when the riding mower 100 turns is defined as the inner wheel, and the drive wheel located on the outside of the curve when the riding mower 100 turns is defined as the outer wheel. That is to say, the inner wheel and the outer wheel are not fixed but switch between the left drive wheel and the right drive wheel as the riding mower 100 changes the direction. For example, when the riding mower 100 turns left, the left drive wheel, that is, the left second traveling wheel 932L is the inner wheel, and the right drive wheel, that is, the right second traveling wheel 932R is the outer wheel; and when the riding mower 100 turns right, the right drive wheel, that is, the right second traveling wheel 932R is the inner wheel, and the left drive wheel, that is, the left second traveling wheel 932L is the outer wheel.

The power supply assembly 96 is configured to supply electric power to at least the cutting assembly 10 and the traveling assembly 93, where the first motors 13 and the second motors 123 are used as electrical devices of the riding mower 100, the light, the display screen, and the like may also be used as the electrical devices of the riding mower 100, and these electrical devices can convert electrical energy into other forms of energy. The power supply assembly 96 includes at least one battery pack for storing the electrical energy. In an example, the voltage of the battery pack is about 56 V. In an example, the power supply assembly 96 is disposed at the rear of the riding mower 100. For example, the power supply assembly 96 is disposed behind the seat 92. In other examples, the power supply assembly 96 may be disposed in the front of the riding mower 100.

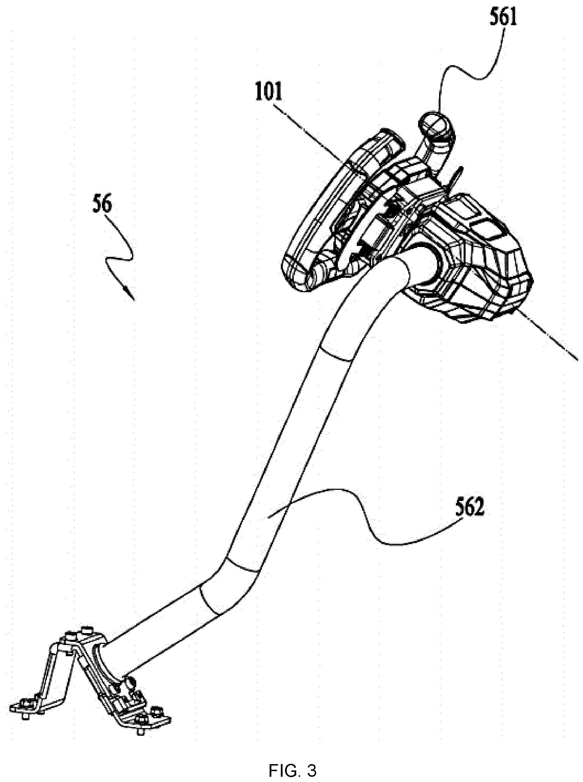

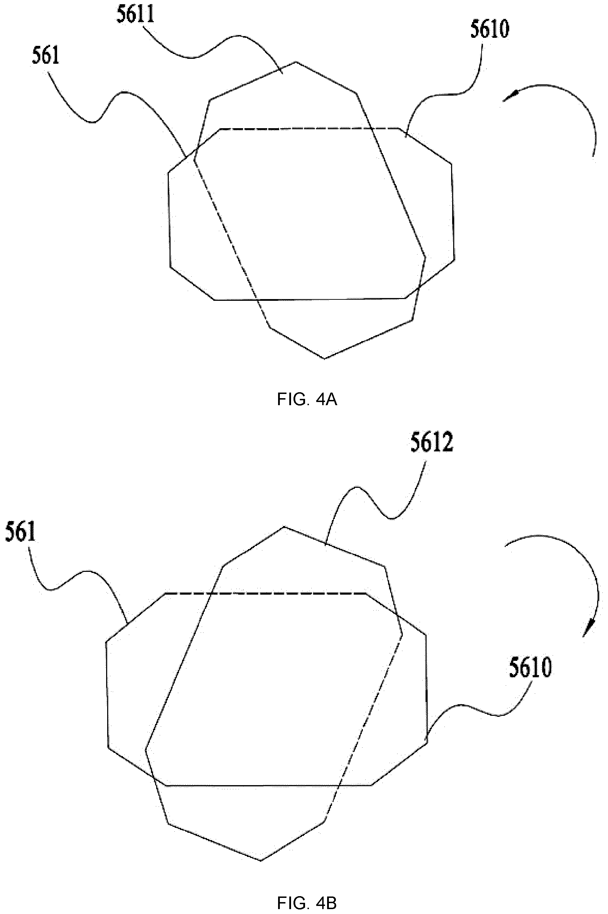

The operating assembly 50 includes a steering wheel assembly 56 and an accelerator pedal assembly 52. The user controls the traveling speed of the riding mower 100 by stepping on the accelerator pedal assembly 52 and controls the traveling direction of the riding mower 100 by turning the steering wheel assembly 56. As shown in FIG. 3, in this example, the steering wheel assembly 56 includes a steering wheel 561 operable by the user to turn and a support rod 562 configured to connect the steering wheel 561 to the vehicle frame 91. The steering wheel 561 is rotatable about a first axis 101, and the steering wheel 561 has an initial position 5610. From the initial position 5610, the steering wheel 561 may rotate to the left about the first axis 101 and reach a first extreme position 5611 as shown in FIG. 4A or may rotate to the right about the first axis 101 and reach a second extreme position 5612 as shown in FIG. 4B. The support rod 562 may be a hollow tube so that while the cost is saved, the wires of the steering wheel assembly 56 are allowed to pass through the hollow tube, thereby improving the safety and aesthetics of the wiring. In other examples, the steering wheel 561 may be mounted to the body in other manners besides the support rod 562, and the present application does not limit the mounting manner of the steering wheel 561. The steering wheel assembly 56 further includes a steering wheel position sensor 563 for detecting the position of the steering wheel 561, for example, an angle sensor configured to detect the angular position of the steering wheel 561. The steering wheel position sensor 563 outputs an angular position signal of the steering wheel 561 to a traveling control module 124, where the angular position may be expressed in degrees. The accelerator pedal assembly 52 includes a pedal 521 and a pedal position sensor 523 for detecting the position of the pedal, for example, an angle sensor. The pedal position sensor 523 detects the angular position of the pedal and outputs an angular position signal of the pedal to the traveling control module 124, where the angular position may be expressed in degrees.

The riding mower 100 further includes the traveling control module 124. The traveling control module 124 calculates and sets the target rotational speeds of the second motors 123 according to the position signals of the pedal 521 and the steering wheel assembly 136 and controls the left second motor 123L and the right second motor 123R separately to drive the left second traveling wheel 932L and the right second traveling wheel 932R to rotate, thereby controlling the traveling speed and traveling direction of the riding mower 100. When the riding mower needs to go straight, the two motors 123 are controlled to operate at the same rotational speed; and when the riding mower needs to turn, the two motors 123 are controlled to operate at different rotational speeds. The traveling control module includes a control chip, such as a microcontroller unit (MCU) or an advanced reduced instruction set computer machine (ARM). The traveling control module may be configured to have a central control chip control the two second motors 123 simultaneously, or two independent control chips control the two motors 123, respectively, which is not limited in the present application.

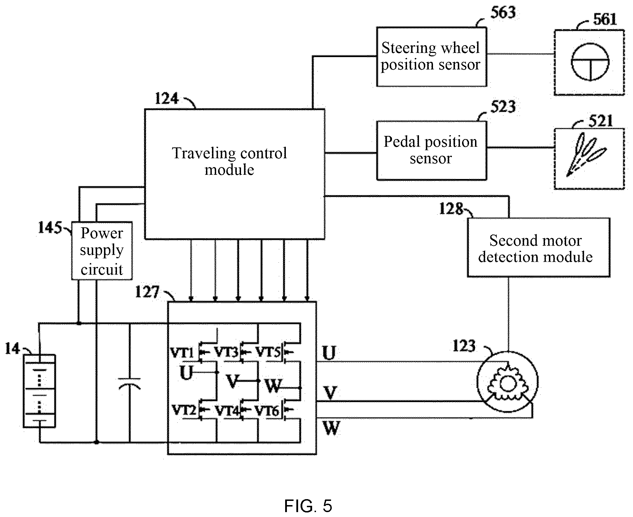

FIG. 5 illustrates a control system for the second motor 123. In an example, in addition to the traveling control module 124, the steering wheel assembly 56, and the accelerator pedal assembly 52, the control system for the second motor 123 further includes a driver circuit 127, a power supply circuit 145, the power supply assembly 96, and a second motor detection module 128. Since the control systems for the two second motors 123 have the same or similar functions and components, the control system described in this example is applicable to both the second motor 123 driving the left drive wheel and the second motor 123 driving the right drive wheel. In other words, although only one second motor 123 is shown in FIG. 5, the traveling control module 124 described here may be used for controlling both the left second motor 123L and the right second motor 123R.

The power supply circuit 145 is connected to the power supply assembly 96. The power supply circuit 145 is configured to receive electrical energy from the power supply assembly 96 and convert the electrical energy of the power supply assembly 96 into electrical energy used by at least the traveling control module 124 and the driver circuit 127. The driver circuit 127 is electrically connected to the traveling control module 124 and the second motor 123, and the driver circuit 127 controls the operation of the second motor 123 according to the drive signal outputted from the traveling control module 124. In this example, the second motor 123 is a brushless motor with three phases of windings, and the driver circuit 127 is a three-phase bridge inverter including semiconductor switches VT1, VT2, VT3, VT4, VT5, and VT6. The semiconductor switches VT1 to VT6 may be field-effect transistors, insulated-gate bipolar transistors (IGBTs), and the like. The gate of each switch is electrically connected to the traveling control module 124, and the drain or source of each switch is connected to the electric motor winding.

The second motor detection module 128 is coupled to the second motor 123 and is configured to detect operating parameters of the second motor 123 in real time, such as the rotor position, the actual rotational speed, and the phase current of the second motor 123, and transmit the operating parameters to the traveling control module 124 so that the traveling control module 124 can control the second motor 123 in conjunction with the current actual situation, thereby controlling the left drive wheel and the right drive wheel. In an example, the second motor detection module 128 includes a speed detection sensor disposed near or inside the second motor 123 to acquire the actual rotational speed of the second motor 123. For example, a Hall sensor is disposed near the rotor of the second motor 123 to acquire the rotor position and actual rotational speed of the second motor 123. In an example, if the second motor 123 is a brushless motor, the outputted electrical signal is the periodically changing back electromotive force of the second motor 123. Therefore, by detecting the voltage of the second motor 123 and finding the zero-crossing of the back electromotive force, the actual rotational speed of the second motor 123 can be obtained.

The traveling control module 124 is configured to calculate and set the target rotational speed of the second motor 123 according to the position signals of the accelerator pedal assembly 52 and the steering wheel assembly 56, compare the target rotational speed with the actual rotational speed of the second motor 123 detected by the second motor detection module 128, and output a corresponding drive signal to the driver circuit 127 in a closed-loop control method. In an example, for the complete control method, reference may be made to the field-oriented control (FOC) method in the related art, which is beyond the scope of the present application and is not described in detail here. The present application focuses on how to calculate and set the target rotational speed of the second motor 123 according to the position signals of the accelerator pedal assembly 52 and the steering wheel assembly 56.

Different angles of the pedal 521 correspond to different basic rotational speeds. When the user wants to go straight, the steering wheel 561 is at the initial position 5610. It is assumed that the angle of the steering wheel at the initial position 5610 is 180 degrees. At this time, the basic rotational speed corresponding to the angle of the pedal 521 is the target rotational speed of the two second motors 123. When the user turns the steering wheel, it is assumed that the angle of the steering wheel is 360 degrees when the steering wheel rotates to the left and reaches the first extreme position 5611, and the angle of the steering wheel is 0 degrees when the steering wheel rotates to the right and reaches the second extreme position 5612. At this time, the traveling control module 124 adjusts the basic rotational speeds of the two second motors 123 separately according to the turning curves of the steering wheel 561 to obtain the target rotational speeds of the two second motors 123, thereby controlling the two second motors 123 to operate at different rotational speeds. It is to be noted that in this example, it is assumed that the steering wheel can rotate by a maximum of 180 degrees to the left or right. In fact, the angle of rotation of the steering wheel may be different from that in this example and may be greater than 180 degrees or less than 180 degrees. The present application does not limit the angle of rotation of the steering wheel.

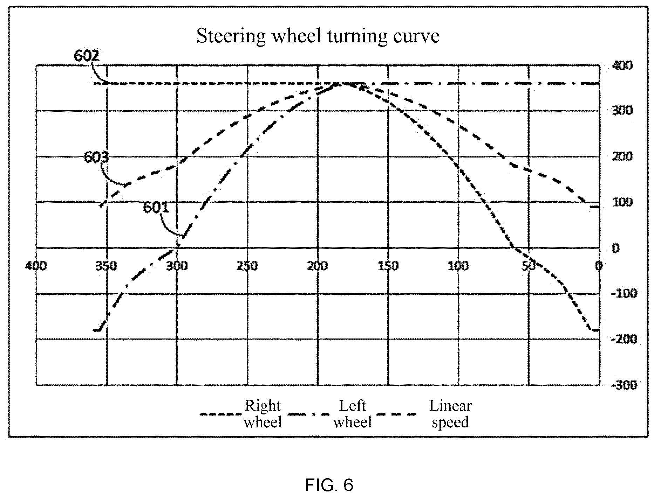

Generally, considering the driving safety of the user, based on the basic rotational speed, the traveling control module 124 reduces the target rotational speed of the inner wheel without changing the target rotational speed of the outer wheel, that is, the target rotational speed of the outer wheel is equal to the basic rotational speed. Referring to FIG. 6, it is assumed that the basic rotational speed is 360 rpm. When the steering wheel 561 turns left, the left drive wheel is the inner wheel. As shown by curve 601, the target rotational speed of the left second motor 123L decreases. The greater the angle of rotation of the steering wheel 561 to the left is, that is, the closer the steering wheel is to the first extreme position 5611, the more the target rotational speed of the left second motor 123L decreases. The right drive wheel is the outer wheel. As shown by curve 602, the target rotational speed of the right second motor 123R remains unchanged. When the steering wheel 561 turns right, the right drive wheel is the inner wheel. As shown by curve 602, the target rotational speed of the right second motor 123R decreases. The greater the angle of rotation of the steering wheel 561 to the right is, that is, the closer the steering wheel is to the second extreme position 5612, the more the target rotational speed of the right second motor 123R decreases. The left drive wheel is the outer wheel. As shown by curve 601, the target rotational speed of the left second motor 123L remains unchanged. When the steering angle of the steering wheel 561 is very large, the inner wheel is controlled to rotate in reverse. For example, when the steering wheel 561 turns left to more than 300 degrees, the target rotational speed of the left second motor 123L decreases to a negative number, and the left drive wheel is driven to rotate in reverse; and when the steering wheel 561 turns right to less than 60 degrees, the target rotational speed of the right second motor 123L decreases to a negative number, and the right drive wheel is driven to rotate in reverse.

In this manner, as shown by curve 603, the linear speed when the riding mower 100 turns is actually less than the linear speed when the riding mower 100 goes straight (in the case where the angles of the pedal 521 are the same). However, after the turn is completed, when the user straightens the steering wheel 561 out or the steering wheel 561 automatically straightens out, especially when the steering wheel 561 straightens out quickly, the rotational speed of the inner wheel increases, causing the vehicle speed to quickly return to the speed when the vehicle goes straight and giving the user a quick rush feeling of being pushed back. In particular, the user did not anticipate that the vehicle speed would increase after the turn was completed, resulting in a relatively poor user experience. To solve this problem, the traveling control module 124 changes the turning curves of the riding mower 100, that is, changes the function for setting the target rotational speeds of the inner wheel and the outer wheel during turning. In particular, when the steering wheel 561 rotates from the initial position 5610 to the extreme position, the traveling control module 124 increases the target rotational speed of the outer wheel. That is to say, during turning, the traveling control module 124 decreases the target rotational speed of the inner wheel while increasing the target rotational speed of the outer wheel.

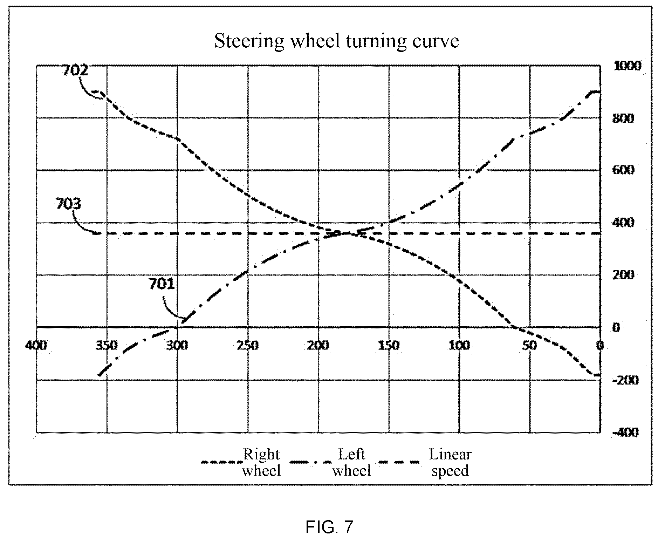

Referring to FIG. 7, it is assumed that the basic rotational speed is 360 rpm. When the steering wheel 561 rotates from the initial position 5610 to the left/toward the first extreme position 5611, the left drive wheel is the inner wheel. As shown by curve 701, the target rotational speed of the left second motor 123L decreases. The greater the angle of rotation of the steering wheel 561 to the left is, that is, the closer the steering wheel is to the first extreme position 5611, the more the target rotational speed of the left second motor 123L decreases. The right drive wheel is the outer wheel. As shown by curve 702, the target rotational speed of the right second motor 123R increases. The greater the angle of rotation of the steering wheel 561 to the left is, that is, the closer the steering wheel 561 is to the first extreme position 5611, the more the target rotational speed of the right second motor 123R increases. When the steering wheel 561 rotates from the initial position 5610 to the right/toward the second extreme position 5612, the right drive wheel is the inner wheel. As shown by curve 702, the target rotational speed of the right second motor 123R decreases. The greater the angle of rotation of the steering wheel 561 to the right is, that is, the closer the steering wheel 561 is to the second extreme position 5612, the more the target rotational speed of the right second motor 123R decreases. The left drive wheel is the outer wheel. As shown by curve 701, the target rotational speed of the left second motor 123L increases. The greater the angle of rotation of the steering wheel 561 to the right is, that is, the closer the steering wheel 561 is to the second extreme position 5612, the more the target rotational speed of the left second motor 123L increases.

When the steering wheel 561 is turned by the user, the traveling control module 124 decreases the target rotational speed of the inner wheel while increasing the target rotational speed of the outer wheel. Therefore, compared with the original case where the target rotational speed of a single-sided wheel is changed, the steering is more responsive, causing operational inconvenience to the user due to excessively high responsiveness and even making it difficult for the user to control the direction. Therefore, the traveling control module 124 is configured such that the smaller the angle of rotation of the steering wheel 561, the smaller the rates of change of the target rotational speeds of the inner wheel and the outer wheel. In this manner, when the steering wheel 561 is turned slightly, the rotational speed difference between the inner wheel and the outer wheel is not too large, thereby avoiding a feeling of loss of control for the user; and when the angle of rotation of the steering wheel 561 is relatively large, the response is quick. For example, when the steering wheel 561 rotates from the initial position 5610 to the extreme position, the slope at which the target rotational speed of the outer wheel increases increases as the angle of rotation of the steering wheel 561 increases, and the slope at which the target rotational speed of the inner wheel decreases increases as the angle of rotation of the steering wheel 561 increases. Moreover, the slope at which the target rotational speed of the outer wheel increases and the slope at which the target rotational speed of the inner wheel decreases change synchronously (synchronization does not necessarily mean that the changes are the same, and the slopes may change by the same proportions). That is to say, when the steering wheel 561 rotates from the initial position 5610 to the extreme position, the slope at which the target rotational speed of the second motor 123 corresponding to the outer wheel increases increases as the angle of rotation of the steering wheel 561 increases, and the slope at which the target rotational speed of the second motor 123 corresponding to the inner wheel decreases increases as the angle of rotation of the steering wheel 561 increases. Moreover, the slope at which the target rotational speed of the second motor 123 corresponding to the outer wheel increases and the slope at which the target rotational speed of the second motor 123 corresponding to the inner wheel decreases change synchronously (synchronization does not necessarily mean that the changes are the same, and the slopes may change by the same proportions or the same differences). Similarly, when the angle of rotation of the steering wheel 561 is very large (the steering wheel 561 approaches the extreme position), the inner wheel is controlled to rotate in reverse. For example, when the steering wheel 561 turns left to more than 300 degrees, the target rotational speed of the left second motor 123L decreases to a negative number, and the left drive wheel is driven to rotate in reverse; and when the steering wheel 561 turns right to less than 60 degrees, the target rotational speed of the right second motor 123R decreases to a negative number, and the right drive wheel is driven to rotate in reverse. Since the wheel rotates in reverse, the slope at which the target rotational speed of the inner wheel decreases should not be too large. Therefore, after the angle of rotation of the steering wheel 561 reaches the critical point at which the inner wheel rotates in reverse, the slopes at which the target rotational speeds of the inner wheel and the second motor 123 corresponding to the inner wheel decrease suddenly change to smaller values and then gradually increase with the angle of rotation of the steering wheel 561. Correspondingly, after the angle of rotation of the steering wheel 561 reaches the critical point at which the inner wheel rotates in reverse, the slopes at which the target rotational speeds of the outer wheel and the second motor 123 corresponding to the outer wheel increase suddenly change to smaller values and then gradually increase with the angle of rotation of the steering wheel 561. It is to be noted that the preceding slope refers to the absolute value, that is to say, no matter whether the target rotational speed increases or decreases, the slope is positive.

Referring to FIG. 7, in an example, when the steering wheel 561 rotates from the initial position 5610 to the extreme position, the change value by which the target rotational speed of the outer wheel increases is equal to the change value by which the target rotational speed of the inner wheel decreases. In this case, if the user does not additionally adjust the pedal 521, that is, the angle of the pedal 521 remains unchanged, the linear speed when the riding mower 100 turns is equal to the linear speed when the riding mower 100 goes straight as shown by curve 703. In this manner, after the turn is completed, when the steering wheel 561 straightens out, the riding mower 100 does not have an acceleration process so that the user does not feel rushed, thereby improving the driving experience of the user.

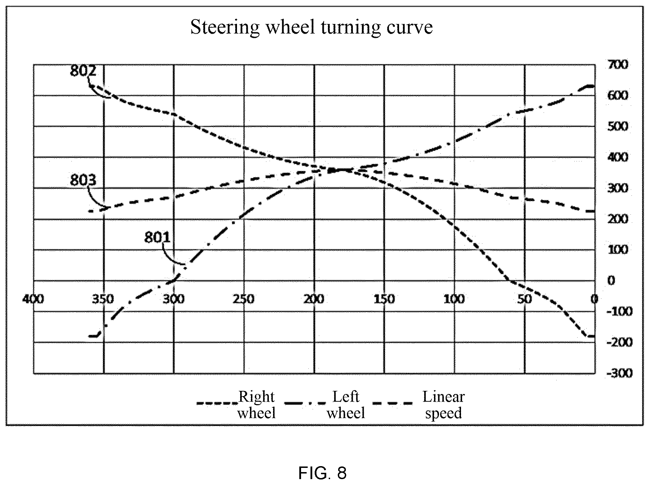

Referring to FIG. 8, in another example, when the steering wheel 561 rotates from the initial position 5610 to the extreme position, the change value by which the target rotational speed of the outer wheel increases is less than the change value by which the target rotational speed of the inner wheel decreases. That is to say, the increase in the rotational speed of the outer wheel is not enough to compensate for the decrease in the rotational speed of the inner wheel. For example, the change value by which the target rotational speed of the outer wheel increases is less than half of the change value by which the target rotational speed of the inner wheel decreases. In this case, if the user does not additionally adjust the pedal 521, that is, the angle of the pedal 521 remains unchanged, the linear speed when the riding mower 100 turns is less than the linear speed when the riding mower 100 goes straight as shown by curve 803. However, during turning, the increase in the rotational speed of the outer wheel compensates to a certain extent for the effect of the decrease in the rotational speed of the inner wheel on the overall speed of the riding mower 100. Therefore, the riding mower 100 decelerates less when turning. After the turn is completed, when the steering wheel 561 straightens out, the acceleration of the riding mower 100 is smaller so that the user does not feel rushed, thereby improving the driving experience of the user.

Further, the riding mower 100 can provide a variety of driving experiences. For example, the traveling control module includes at least two control modes. In the first control mode, when the steering wheel 561 rotates from the initial position 5610 to the extreme position, the change value by which the target rotational speed of the outer wheel increases is equal to the change value by which the target rotational speed of the inner wheel decreases. In this manner, the linear speed of the riding mower 100 remains unchanged. In the second control mode, when the steering wheel 561 rotates from the initial position 5610 to the extreme position, the change value by which the target rotational speed of the outer wheel increases is less than the change value by which the target rotational speed of the inner wheel decreases. For example, the change value by which the target rotational speed of the outer wheel increases is half of the change value by which the target rotational speed of the inner wheel decreases. In this manner, the overall speed of the riding mower 100 slightly decreases so that not only does the speed decrease during turning to ensure driving safety, but also the feeling of being pushed back when the steering wheel 561 straightens out after turning can be avoided. The steering wheel assembly 56 may include related operating members. For example, buttons are provided on the steering wheel 561 so that the user can choose between the at least two control modes according to the preferences.

In the present application, different turning curves are designed for the left drive wheel and the right drive wheel. In this manner, during turning, the target rotational speed of the outer wheel increases, and the target rotational speed of the inner wheel decreases so that when the turn is completed and the steering wheel straightens out, the riding mowing device does not accelerate quickly. The turning control method of the present application is also applicable to other riding devices.

It is to be noted that the preceding angles of the initial position and the extreme position and the target rotational speeds corresponding to different angles are only used for explaining the concept and principle of the present application and do not limit the present application. The implementer can select the values according to the situation of the device. The preceding description is only about preferred examples of the present application and the adopted technical principles. In addition to the riding mowing device, the present application is also applicable to the traveling control of other riding devices.

## Claims

1. A riding mowing device, comprising:
a seat for a user to sit on;
a vehicle frame for supporting the seat;
a cutting assembly comprising a cutting deck and a mowing element, wherein the mowing element is at least partially accommodated in the cutting deck;
a traveling assembly configured to drive the riding mowing device to travel and comprising a left drive wheel and a right drive wheel;
a power supply assembly configured to supply power to at least the cutting assembly and the traveling assembly and mounted to the vehicle frame; and
a steering wheel assembly comprising a steering wheel for the user to turn to control a direction of the riding mowing device, wherein the steering wheel comprises an initial position and an extreme position;
wherein the riding mowing device further comprises a traveling control module configured to, when the steering wheel rotates from the initial position to the extreme position, decrease a target rotational speed of an inner wheel among the left drive wheel and the right drive wheel and increase a target rotational speed of an outer wheel among the left drive wheel and the right drive wheel.

2. The riding mowing device of claim 1, wherein a change value by which the target rotational speed of the outer wheel increases is equal to a change value by which the target rotational speed of the inner wheel decreases.

3. The riding mowing device of claim 1, wherein a change value by which the target rotational speed of the outer wheel increases is less than a change value by which the target rotational speed of the inner wheel decreases.

4. The riding mowing device of claim 1, wherein the traveling control module comprises at least two control modes; in a first control mode, a change value by which the target rotational speed of the outer wheel increases is equal to a change value by which the target rotational speed of the inner wheel decreases; and in a second control mode, the change value by which the target rotational speed of the outer wheel increases is less than the change value by which the target rotational speed of the inner wheel decreases.

5. The riding mowing device of claim 4, wherein the steering wheel assembly further comprises an operating member configured to be operated by the user to switch between the first control mode and the second control mode.

6. The riding mowing device of claim 1, wherein a slope at which the target rotational speed of the inner wheel decreases increases as an angle of rotation of the steering wheel increases.

7. The riding mowing device of claim 6, wherein a slope at which the target rotational speed of the outer wheel increases increases as the angle of rotation of the steering wheel increases.

8. The riding mowing device of claim 7, wherein when the target rotational speed of the inner wheel decreases to a negative value, the slope at which the target rotational speed of the inner wheel decreases suddenly decreases, and the slope at which the target rotational speed of the outer wheel increases suddenly decreases.

9. The riding mowing device of claim 1, wherein a slope at which the target rotational speed of the outer wheel increases and a slope at which the target rotational speed of the inner wheel decreases change synchronously.

10. A riding device, comprising:
a seat for a user to sit on;
a vehicle frame for supporting the seat;
a traveling assembly configured to drive the riding device to travel and comprising a left drive wheel and a right drive wheel;
a power supply assembly configured to supply power to at least the traveling assembly and mounted to the vehicle frame; and
a steering wheel assembly comprising a steering wheel for the user to turn to control a direction of the riding device, wherein the steering wheel comprises an initial position and an extreme position;
wherein the riding device further comprises a traveling control module configured to, when the steering wheel rotates from the initial position to the extreme position, increase a target rotational speed of an outer wheel among the left drive wheel and the right drive wheel.

11. The riding device of claim 10, further comprising a cutting assembly, wherein the cutting assembly comprises a cutting deck and a mowing element, and the mowing element is at least partially accommodated in the cutting deck.

12. The riding device of claim 10, wherein when the target rotational speed of the outer wheel among the left drive wheel and the right drive wheel increases, a target rotational speed of an inner wheel among the left drive wheel and the right drive wheel decreases.

13. The riding device of claim 10, wherein a slope at which the target rotational speed of the outer wheel increases increases as an angle of rotation of the steering wheel increases.

14. The riding device of claim 12, wherein a slope at which the target rotational speed of the outer wheel increases and a slope at which the target rotational speed of the inner wheel decreases change synchronously.

15. The riding device of claim 12, wherein when the target rotational speed of the inner wheel decreases to a negative value, a slope at which the target rotational speed of the inner wheel decreases suddenly decreases, and a slope at which the target rotational speed of the outer wheel increases suddenly decreases.

16. A control method for a riding device, wherein the riding device comprises:
a seat for a user to sit on;
a vehicle frame for supporting the seat;
a traveling assembly configured to drive the riding device to travel and comprising a left drive wheel and a right drive wheel;
a power supply assembly configured to supply power to at least the traveling assembly and mounted to the vehicle frame; and
a steering wheel assembly comprising a steering wheel for the user to turn to control a direction of the riding device, wherein the steering wheel comprises an initial position and an extreme position;
wherein the control method comprises:
when the steering wheel rotates from the initial position to the extreme position, increasing a target rotational speed of an outer wheel among the left drive wheel and the right drive wheel.

17. The control method of claim 16, wherein when the target rotational speed of the outer wheel among the left drive wheel and the right drive wheel increases, a target rotational speed of an inner wheel among the left drive wheel and the right drive wheel decreases.

18. The control method of claim 16, wherein a slope at which the target rotational speed of the outer wheel increases increases as an angle of rotation of the steering wheel increases.

19. The control method of claim 17, wherein a slope at which the target rotational speed of the outer wheel increases and a slope at which the target rotational speed of the inner wheel decreases change synchronously.

20. The control method of claim 17, wherein when the target rotational speed of the inner wheel decreases to a negative value, a slope at which the target rotational speed of the inner wheel decreases suddenly decreases, and a slope at which the target rotational speed of the outer wheel increases suddenly decreases.
